# EUROPÄISCHE PATENTSCHRIFT

(11) **EP 1 698 517 B1**
(45) Veröffentlichungstag und Bekanntmachung des Hinweises auf die Patenterteilung: **23.04.2008**
(21) Anmeldenummer: 06003568.0
(22) Anmeldetag: 22.02.2006
(51) Int. Cl.: B60R 5/04

(54) **Laderaumabdeckung für ein Kraftfahrzeug**
Load compartment cover for vehicles
Volet cache-bagages pour véhicule

(30) Priorität: 02.03.2005 DE 102005010761
(43) Veröffentlichungstag der Anmeldung: 06.09.2006
(73) Patentinhaber: BOS GmbH & Co. KG, 73760 Ostfildern (DE)
(72) Erfinder: Schaller, Dr. Wolfgang, 73728 Esslingen (DE); Maier, Matthias, 73733 Esslingen (DE); Walter, Herbert, 73061 Ebersbach (DE); Sieg, Wolfgang, 70437 Stuttgart (DE)
(74) Vertreter: Patentanwälte Ruff, Wilhelm, Beier, Dauster & Partner

(56) Entgegenhaltungen:
- EP-A- 1 243 474
- DE-U1- 20 211 074
- US-A1- 2002 113 450
- US-A1- 2005 012 352
- US-B1- 6 416 103

## Beschreibung

Die Erfindung betrifft eine Laderaumabdeckung gemäß dem Oberbegriff des Anspruchs 1.

Eine Einrichtung nach dem Oberbegriff des Anspruchs 1 ist aus der DE 20211074 U bekannt.

Eine Laderaumabdeckung für ein Kraftfahrzeug ist auch aus der WO 98/24657 A2 bekannt. Die Laderaumabdeckung weist ein flexibles Flächengebilde auf, das auf einer Wickelwelle auf- und abwickelbar gehalten ist. Die Wickelwelle ist in einem Kassettengehäuse integriert, das fahrzeugseitig in einem Laderaum des Kraftfahrzeugs befestigt ist. An seinem in Auszugrichtung vorderen Stirnende ist das flexible Flächengebilde mit einem Auszugprofil versehen, das mit seinen gegenüberliegenden Stirnseiten über die Breite des Flächengebildes hinausragt und in bogenförmigen Führungen im Bereich einer D-Säule der Fahrzeugkarosserie zwischen einer horizontalen Funktionsstellung und einer nach oben verlagerten Komfortstellung verlagerbar ist. Die Komfortstellung dient dazu, bei geöffneter Heckklappe eine vereinfachte Be- und Entladung des Laderaumes zu ermöglichen, ohne die Laderaumabdeckung auszuhängen und später wieder in ihre horizontale Funktionsstellung zu überführen. Das Auszugprofil steht mit Hilfe von Seilschlaufen, die zugbelastbar sind, mit der Heckklappe in Verbindung, so dass bei einem Öffnen der Heckklappe die Seilschlaufen zwangsläufig das Auszugprofil in den Führungen der D-Säule nach oben verschieben. In den Führungen verläuft eine Zugfeder ausgehend von den Stirnseiten des Auszugprofiles nach unten, die das Auszugprofil aus der oberen Komfortstellung durch entsprechende Rückstellkräfte wieder in die untere, horizontale Stellung überführen. Aus der WO 98/24657 A2 ist auch eine Ausführungsform bekannt, bei der anstelle eines Zugmittels in Form der Seilschlaufe eine zug- und drucksteife Übertragungsstange an der Heckklappe einerseits und an dem entsprechenden Stirnbereich des Auszugprofiles andererseits angreift. Dadurch wird mittels der starren Übertragung jede Bewegung der Heckklappe auf eine Hub- oder Senkbewegung des Auszugprofiles in den fahrzeugseitigen Führungen der D-Säule übertragen.

Aufgabe der Erfindung ist es, eine Laderaumabdeckung der eingangs genannten Art zu schaffen, die eine verbesserte Verlagerbarkeit des Flächengebildes abhängig von einer Bewegung des Karosserieteiles ermöglicht.

Diese Aufgabe wird dadurch gelöst, dass die Steuermittel mechanisch sind und dass das Kraftübertragungsmittel (10) mittels wenigstens eines mechanischen Übertragungsmittels durch eine Bewegung des Karosserieteiles antreibbar ist. Dadurch ist es möglich, auf das Auszugprofil über die gesamte Länge des Verlagerungsweges äußerst gleichmäßige Schub- oder Zugkräfte auszuüben, unabhängig davon, in welcher Stellung sich das Karosserieteil befindet. Als Karosserieteile im Sinne der Erfindung sind insbesondere Heckteile in Form von Hecktüren oder Heckklappen anzusehen. Vorzugsweise ist der Laderaum in einem Heckbereich des Kraftfahrzeugs vorgesehen. Die Kraftübertragungsmittel sollen Kräfte in entgegengesetzten Richtungen übertragen können. Als Kraftübertragungsmittel ist vorzugsweise ein flexibles Zug- und Druckmittel vorgesehen, das mit einem Außenmantelprofil in Form einer Verzahnung, einer wendel- oder gewindeförmigen Ummantelung mit einem Metalldraht versehen oder nach Art einer flexiblen Zahnstange ausgebildet ist. Die fahrzeugseitigen Führungen sind derart mit Schlaufen- oder Hülsenführungsabschnitten versehen, dass eine stabile Führung längs einer gewünschten Führungsbahn für die flexiblen Zug- und Druckmittel erfolgt. Vorzugsweise sind die Zug- und Druckmittel als flexible Kunststoffprofile gestaltet und in entsprechenden Ummantelungen geführt, die wiederum stabil fahrzeugseitig abgestützt sind.

In Ausgestaltung der Erfindung verlaufen die fahrzeugseitigen Führungen gekrümmt, und die Zug- und Druckmittel weisen Mitnehmer auf, die entgegen einer Aufwickelrichtung des Flächengebildes offen gestaltet sind. Die Mitnehmer sind dazu vorgesehen, die gegenüberliegenden Stirnbereiche des Auszugprofiles aufzunehmen und so das Auszugprofil längs der Führungen zu verlagern. Die offene Gestaltung ermöglicht bei Bedarf ein Lösen des Auszugprofiles aus den Mitnehmern. Dadurch ist zum einen individuell eine manuelle Entnahme des Auszugprofiles aus den fahrzeugseitigen Führungen ermöglicht. Zum anderen ist gewährleistet, dass das Auszugprofil automatisch aus den Mitnehmern herausgleitet, sobald das Auszugprofil während eines Verlagerungsweges auf ein Hindernis trifft. Vorzugsweise ist das flexible Flächengebilde permanent in Aufwickelrichtung durch eine Rückholfeder kraftbeaufschlagt. Die Mitnehmer weisen vorzugsweise ein C-artiges Querschnittsprofil auf, wobei der offene Bereich des C-profilförmigen Querschnittes vorzugsweise nach hinten zu einem Heckbereich des Fahrzeugs hin offen ist.

In weiterer Ausgestaltung der Erfindung ist eine Stützfläche jedes Mitnehmers eben und parallel zu der jeweiligen fahrzeugseitigen Führung gestaltet, und eine korrespondierende Stirnseite des Auszugprofils ist mit einer entsprechend gestalteten ebenen Auflagefläche versehen, die sich kraftschlüssig auf der Stützfläche abstützt. In Aufwickelrichtung stützt sich das Auszugprofil somit formschlüssig an den Mitnehmern ab. Entgegen der Aufwickelrichtung wird lediglich ein Kraftschluss erzielt, der aufgehoben werden kann und dann automatisch zu einem Lösen des Auszugprofils aus den Mitnehmern führt.

In weiterer Ausgestaltung der Erfindung ist das Zug- und Druckmittel tangential zwischen dem Antriebsrad und einem parallel drehbar gelagerten Rückholrad gehalten, das mit einem in Rückholrichtung wirksamen Federspeicher versehen ist, wobei das Antriebsrad und das Rückholrad einander relativ zu dem Zug- und Druckmittel gegenüberliegen. Dadurch werden auf das Zug- und Druckmittel besonders gute Belastungsverhältnisse erzielt. Denn dadurch, dass das Antriebsrad und das Rückholrad jeweils von gegenüberliegenden Seiten her auf das Zug- und Druckmittel einwirken, findet ein Ausgleich von Radialkräften statt.

Zudem wird die Reibung für das Zug- und Druckmittel im Bereich des Antriebsrades und des Rückholrades reduziert.

In weiterer Ausgestaltung der Erfindung ist das Zug- und Druckmittel als flexible Welle mit einer verzahnungs- oder gewindeförmigen Außenprofilierung ausgeführt, und das Antriebsrad und das Rückholrad sind als Zahnräder gestaltet. Dadurch kämmen das Antriebsrad und das Rückholrad mit der flexiblen Welle und bewirken so eine Längsverlagerung der Welle längs der fahrzeugseitigen Führungen.

In weiterer Ausgestaltung der Erfindung ist das Übertragungsmittel als Seilzug ausgeführt, der über einen außerhalb eines Fahrzeuginnenraumes verlaufenden Teil seiner Länge längs einer Gasdruckfeder zur Unterstützung einer Öffnungsbewegung des Karosserieteiles verlegt ist. Die Verlegung längs der Gasdruckfeder ermöglicht eine platzsparende Unterbringung. Zudem ist durch die Verlegung des Seilzuges im Bereich der Gasdruckfeder sichergestellt, dass der Seilzug nicht bei einem Öffnen oder Schließen des Karosserieteiles, insbesondere einer Hecklappe, beschädigt wird.

In weiterer Ausgestaltung der Erfindung ist der Gasdruckfeder eine Hülsenblende zugeordnet, die einen Verlauf des Seilzuges längs der Gasdruckfeder überdeckt. Dadurch ist es möglich, den Seilzug in seinem Verlegungsbereich längs der Gasdruckfeder unsichtbar anzuordnen. Die Hülsenblende ist so ausgeführt, dass die teleskopförmige Linearbewegung der Gasdruckfeder nicht beeinträchtigt wird.

In weiterer Ausgestaltung der Erfindung ist dem mechanischen Übertragungsmittel ein Übersetzungsgetriebe zugeordnet, um einen Öffnungs- oder Schließweg des Karosserieteiles auf einen Verlagerungsweg des Zug- und Druckmittels abzustimmen. Dadurch ist es gewährleistet, dass insbesondere ein relativ kurzer Öffnungs- oder Schließweg des Karosserieteiles zu einem längeren Verlagerungsweg des Auszugprofiles führen kann. Dabei ist insbesondere berücksichtigt, dass unter dem Öffnungs- oder Schließweg des Karosserieteiles nicht der gesamte Weg einer Unterkante einer Heckklappe zwischen ihrer Schließ- und ihrer Öffnungsposition zu verstehen ist, sondern lediglich ein geringer Teil dieses Weges, den insbesondere ein weiter oben liegender Bereich der Heckklappe relativ zu der D-Säule zwischen seiner Öffnungs- und seiner Schließposition durchführt.

In weiterer Ausgestaltung der Erfindung ist dem Antriebsrad eine Wickeltrommel zugeordnet, auf die ein Übertragungsseil des Seilzugs auf- und abwickelbar ist. Dadurch ist eine definierte Auf- und Abwicklung des Übertragungsseiles erzielbar.

In weiterer Ausgestaltung der Erfindung weist die Wickeltrommel Windungskammern auf, um benachbarte Windungen des Übertragungsseiles auf der Wickeltrommel voneinander zu trennen. Hierdurch wird eine weiter verbesserte Ordnung des Übertragungsseiles beim Auf- oder Abwickeln erzielt. Die Vereinzelung der Windungen gewährleistet, dass keine unerwünschten Schlingen oder Schlaufen durch die Windungen des Übertragungsseiles gebildet werden.

In weiterer Ausgestaltung der Erfindung steht die Wickeltrommel mittels einer Sicherungsmechanik mit dem Antriebsrad in Wirkverbindung. Die Sicherungsmechanik ist notwendig, um einen Missbrauchschutz der Vorrichtung zu bewirken.

In weiterer Ausgestaltung der Erfindung ist der Sicherungsmechanik eine Zählmechanik zugeordnet, die abhängig von einer definierten Anzahl von Umdrehungen der Wickeltrommel die Sicherungsmechanik in ihre Leerlaufstellung oder ihre Antriebsstellung überführt. Dadurch ist das Antriebsrad nach Durchführung der Anzahl von Umdrehungen, die für eine Verlagerungsbewegung zwischen zwei endseitigen Funktionsstellungen des Auszugprofiles notwendig sind, antriebsmäßig abkoppelbar.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch eine Ausführungsform einer erfindungsgemäßen Laderaumabdeckung in einem Kraftfahrzeug,
- Fig. 2: in vergrößerter Darstellung einen Ausschnitt des Kraftfahrzeugs nach Fig. 1 im Bereich einer Gasdruckfeder zur Unterstützung der Öffnungsbewegung einer Heckklappe,
- Fig. 3: schematisch eine Verlegung eines Seilzuges eines Zug- und Druckmittels längs der Gasdruckfeder ähnlich Fig. 2,
- Fig. 4: eine im wesentlichen zug- und drucksteife Ausführung eines Zug- und Druckmittels im Bereich der Gasdruckfeder,
- Fig. 5: schematisch in einem Ausschnitt einen Mitnehmer für das Auszugprofil der Laderaumabdeckung in einer fahrzeugseitigen Führung,
- Fig. 6: in vergrößerter schematischer Darstellung eine auf das Zugund Druckmittel wirkende Antriebskombination,
- Fig. 7: schematisch in einer Schnittdarstellung den Antriebsstrang für das Zug- und Druckmittel im Bereich des Antriebsrades und einer zugeordneten Wickeltrommel,
- Fig. 8: schematisch eine weitere Ausführung einer Wickeltrommel ähnlich Fig. 7 und
- Fig. 9: eine Zählmechanik für eine Steuerung eines Freilaufes des Antriebsrades in Form einer Malteser-Kreuzstellung.

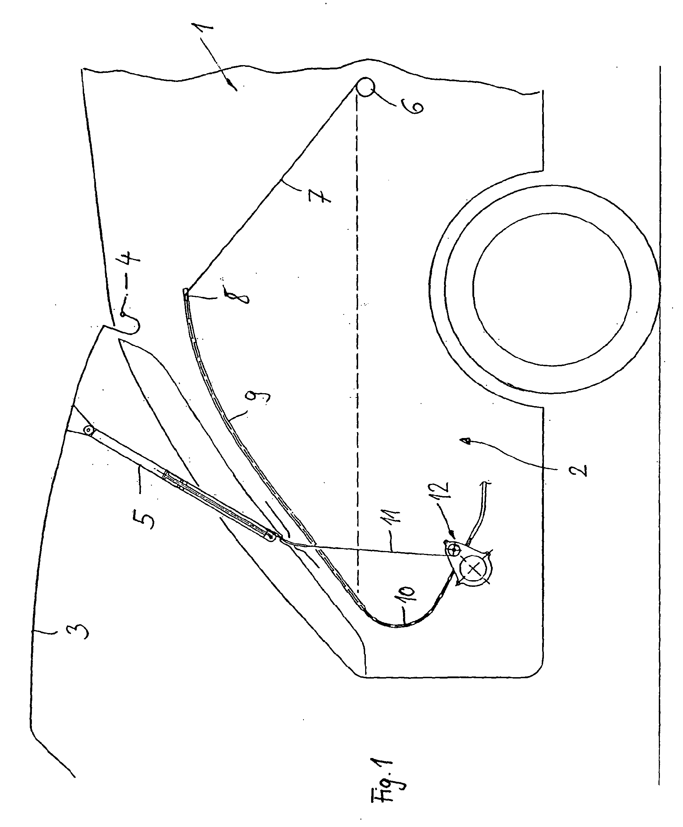

Ein Kraftfahrzeug 1 weist in grundsätzlich bekannter Weise heckseitig einen Laderaum 2 auf, der heckseitig durch ein bewegliches Karosserieteil in Form einer Heckklappe 3 verschließbar ist. Die Heckklappe 3 ist fahrzeugseitig im Bereich eines Fahrzeugdachrahmens um eine Scharnierachse 4 schwenkbeweglich gelagert. Eine Öffnungsbewegung der Heckklappe 3 aus einer Schließposition in eine Öffnungsposition gemäß Fig. 1 wird durch zwei parallel zueinander angeordnete Gasdruckfedern 5 unterstützt, wobei die Gasdruckfedern 5 einen durch die Heckklappe 3 verschließbaren Heckausschnitt zu beiden Seiten flankieren. Die Gasdruckfedern 5 stützen sich oben im Bereich der Heckklappe 3 und unten fahrzeugseitig im Bereich eines den Heckausschnitt umgebenden Karosserierahmens ab.

In dem Laderaum 2 ist an einer - in normaler Fahrtrichtung des Kraftfahrzeugs 1 gesehen - vorderen Begrenzungswand des Laderaumes 2 eine Wickelwelle 6 einer Laderaumabdeckung fahrzeugseitig gehalten und um eine in Fahrzeugquerrichtung verlaufende Wickelachse drehbar gelagert. Auf der Wickelwelle 6 ist ein flexibles Flächengebilde 7 auf- und abwickelbar gehalten, das sich zumindest weitgehend über eine gesamte Breite des Laderaumes und in einer ausgezogenen Schutzposition zumindest nahezu über eine gesamte Länge des Laderaumes 2 erstreckt. Die horizontal ausgezogene Schutzposition des Flächengebildes 7 ist durch die gestrichelte Darstellung in Fig. 1 verdeutlicht. Das Flächengebilde 7 wird durch eine auf die Wickelwelle 6 wirkende Rückholfeder in Aufwickelrichtung permanent zugbeaufschlagt. Ein in Auszugrichtung vorderes Stirnende des Flächengebildes 7 ist mit einem Auszugprofil 8 verbunden, das sich parallel zur Wickelachse der Wickelwelle 6 über die gesamte Breite des Flächengebildes 7 erstreckt und zu beiden Seiten mit seinen Stirnbereichen über das Flächengebilde 7 seitlich hinausragt. Die gegenüberliegenden Stirnbereiche des Auszugprofiles 8 sind in fahrzeugseitigen Führungen 9 längs verlagerbar gehalten. Die fahrzeugseitigen Führungen sind im Bereich gegenüberliegender Seitenteile der Fahrzeugkarosserie oder in entsprechenden Seitenverkleidungen fahrzeugfest angeordnet. Bei der Ausführungsform gemäß Fig. 1 verlaufen die fahrzeugseitigen Führungen 9 etwa längs zugehöriger D-Säulen der Fahrzeugkarosserie, die den Heckausschnitt auf gegenüberliegenden Seiten flankieren. Die fahrzeugseitigen Führungen 9 steigen somit vom Heck aus bis etwa zu einem Dachbereich schräg an und sind mit einer Krümmung in Richtung zur Horizontalen am Übergang zum Dachbereich versehen.

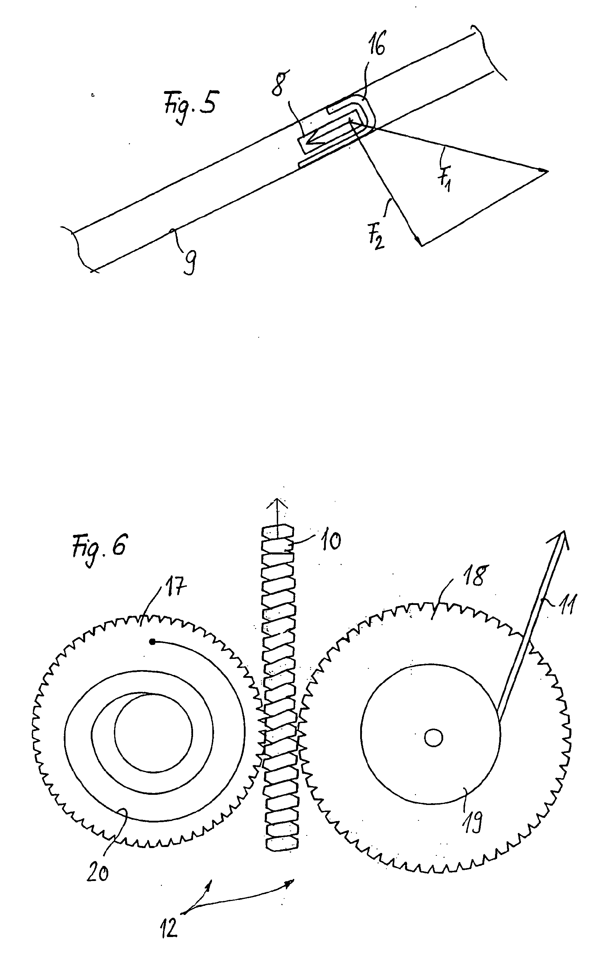

Wie anhand der Fig. 5 erkennbar ist, sind die Stirnbereiche des Auszugprofiles 8 mit Hilfe von Mitnehmern 16 in der jeweiligen fahrzeugseitigen Führung 9 gehalten. Die Mitnehmer 16 sind mit Zug- und Druckmitteln 10 fest verbunden, die längs der fahrzeugseitigen Führungen 9 in beiden Richtungen linear verschiebbar geführt sind. Durch eine entsprechende Verlagerung der Zug- und Druckmittel 10 bewegen die Mitnehmer somit das Auszugprofil 8 zwangsläufig zwischen einer in Fig. 1 dargestellten, nach oben verlagerten Komfortstellung des Flächengebildes 7 und einer gestrichelt dargestellten Schutzposition des Flächengebildes 7.

Die Komfortstellung dient dazu, bei geöffneter Heckklappe 3 eine Be- oder Entladung des Laderaumes 2 zu ermöglichen, ohne die Laderaumabdeckung entfernen und so das Flächengebilde 7 aufwickeln zu müssen.

Um mechanisch eine Kopplung einer Öffnungs- oder Schließbewegung der Heckklappe 3 mit einer Überführung des Flächengebildes 7 und des Auszugprofiles 8 in die Komfortstellung bzw. die Schließstellung zu bewirken, ist eine mechanische Antriebseinheit 12 für jedes Zug- und Druckmittel 10 jeweils über ein Übertragungsmittel in Form eines Seilzuges 11 mit der Heckklappenbewegung wirkverbunden. Um eine synchrone Bewegung beider Zug- und Druckmittel 10 im Bereich gegenüberliegenden Seitenwände des Laderaumes 2 zu ermöglichen, ist jede Seite mit einem eigenen Seilzug 11 und einer eigenen mechanischen Antriebseinheit 12 versehen, die identisch zueinander ausgeführt sind. Auch die Zug- und Druckmittel 10 beider Seiten und die fahrzeugseitigen Führungen 9 beider Seiten sind identisch ausgeführt. Dadurch, dass die Heckklappe 3 sich über die Fahrzeugbreite erstreckt und beide Seilzüge 11 gleichzeitig beaufschlagt, wirkt die Heckklappe 3 als Brücke, die zwangsläufig eine gleichzeitige und gleichmäßige Betätigung beider Zug- und Druckmittel 10 um gleiche Beträge ermöglicht. Dadurch wird sichergestellt, dass das Auszugprofil 8 in den fahrzeugseitigen Führungen 9 jeweils parallel verlagert wird und Schrägstellungen des Auszugprofiles 8 vermieden werden. Die Verlagerung des Auszugprofiles 8 parallel zur Wickelachse der Wickelwelle 6 gewährleistet ein gleichmäßiges Auf- und Abwickeln des Flächengebildes 7 und eine gleichmäßig gespannte Positionierung des Flächengebildes 7 unabhängig von der entsprechenden Verlagerungsposition des Auszugprofiles 8.

Das Zug- und Druckmittel ist als flexibles Längsprofil, vorzugsweise als flexibles Kunststoffprofil oder als flexible Welle ausgeführt, die außenseitig mit einer Verzahnung oder - bei einer Welle ― mit Gewindeprofilierungen versehen sind. Die flexible Welle oder das Längsprofil sind wenigstens über die Länge der fahrzeugseitigen Führung 9 in einer Ummantelung linear verschiebbar geführt, um ein Abwinkeln oder Ausweichen der Welle bei entsprechenden Zug- oder Druckbelastungen zu vermeiden. Die entsprechende Ummantelung ist in geeigneter Weise fahrzeugseitig gestützt, um ihrerseits keine unerwünschten Biegungen zu erfahren.

Die grundsätzliche Funktion und der grundsätzliche Aufbau der mechanischen Antriebseinheit 12 gemäß Fig. 1 ist anhand der Fig. 6 erkennbar. Das mit der entsprechenden Außenprofilierung versehene Zug- und Druckmittel ist tangential zwischen zwei einander gegenüberliegenden Zahnrädern geführt, die mit der Außenprofilierung des Zug- und Druckmittels 10 kämmen und so entsprechende Verschiebungen des Zug- und Druckmittels 10 in einer der beiden Längsrichtungen des Zug- und Druckmittels 10 ermöglichen. Das eine Zahnrad ist als Rückhol- oder Federrad 17 ausgeführt, das in einer Drehrichtung durch einen Federmotor oder -speicher, insbesondere durch eine Spiralfeder 20, beaufschlagt ist. Das gegenüberliegende Zahnrad stellt ein Antriebsrad 18 dar, das parallel zu dem Federrad 17 drehbar gelagert ist und das über den Seilzug 11 und eine Wickeltrommel 19 mit der Heckklappe 3 gekoppelt ist. Da der Seilzug 11 lediglich als Zugmittel ausgebildet ist, kann das Antriebsrad 18 lediglich in einer Drehrichtung, die der Zugrichtung des Seilzuges 11 entspricht, eine Übertragung von Antriebskräften auf das Zug- und Druckmittel 10 ausüben. Dies ist die Richtung, in der die Heckklappe 3 geöffnet wird. Denn beim Öffnen der Heckklappe wird der Seilzug 11 auf Zug belastet und das Antriebsrad 18 kann entsprechend in Funktion treten. In der entgegengesetzten Richtung, d.h. insbesondere in Schließrichtung der Heckklappe 3, kann der Seilzug 11 keine Kräfte ausüben. Hier wirkt dann das Rückhol- oder Federrad 17.

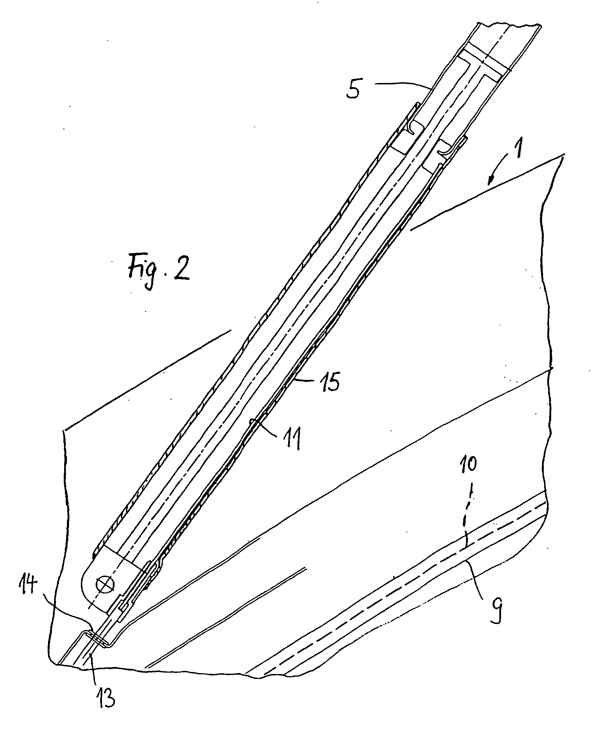

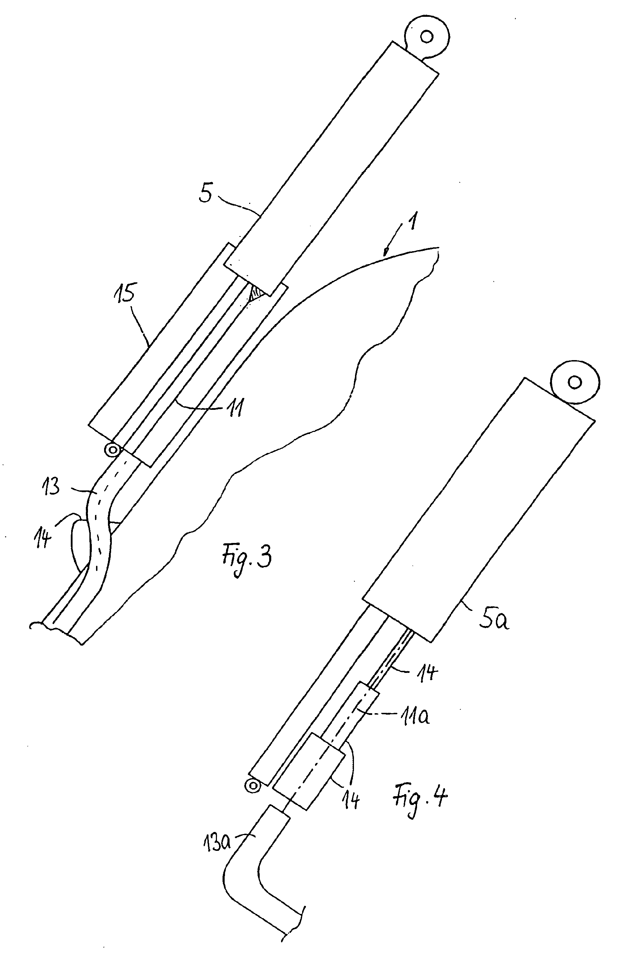

Der Seilzug 11 ist als Bowdenzug ausgeführt. Ein Übertragungsseil des Seilzuges 11 greift, wie anhand der Fig. 2 und 3 erkennbar ist, mit seinem einen Stirnende heckklappenseitig an einem heckklappenseitigen Bauteil der Gasdruckfeder 5 an und ist mit seinem anderen Stirnende auf der Wickeltrommel 19 gehalten. Ausgehend von dem an dem Bauteil der Gasdruckfeder 5 gehaltenen Stirnende ist das Übertragungsseil des Seilzuges 11 zunächst parallel zu einem an der Fahrzeugkarosserie des Kraftfahrzeugs 1 angelenkten Kolben der Gasdruckfeder 5 geführt und tritt anschließend in einen Hülsen- oder Rohrabschnitt 13 des Bowdenzuges ein, der über eine Dichtanordnung 14 durch eine Karosserieau-ßenhaut der Fahrzeugkarosserie hindurch ins Fahrzeuginnere geführt ist. Um den Seilverlauf des Seilzuges 11 im Bereich der Gasdruckfeder 5 unsichtbar zu überdecken, ist eine rohrförmige Hülsenblende 15 vorgesehen, die an dem karosserieseitigen Bauteil der Gasdruckfeder 5 befestigt und relativ zu dem heckklappenseitigen Bauteil der Gasdruckfeder 5 verschiebbar geführt ist. Die Hülsenblende 15 übergreift das heckklappenseitige Bauteil der Gasdruckfeder 5, wie anhand der Fig. 2 und 3 erkennbar ist.

Bei der Ausführung nach Fig. 4 ist der Bowdenzug 13a im Bereich des Verlaufes längs der Gasdruckfeder 5a nicht nur zugstabil, sondern auch druckstabil ausgeführt. Hierzu ist das Übertragungsseil des Seilzuges 11a in einer Teleskophülsenanordnung 14 geführt, die je nach Teleskopstellung der Gasdruckfeder 5a ineinanderschiebbar oder auseinanderziehbar ist. Dadurch wird vermieden, dass bei einem Zusammendrücken der Gasdruckfeder 5 das Übertragungsseil 11a aufgrund der fehlenden Zugbelastung erschlafft und sich in unkontrollierte Schlaufen legt. Durch die Teleskophülsenanordnung 14 wird auch der freiliegende Bereich des Seilzuges 11a ähnlich wie in der Führung durch die Ummantelung des Bowdenzuges 13a geführt. Dennoch kann durch die Teleskopierbarkeit ein Längenausgleich entsprechend einer Längenänderung der Gasdruckfeder 5 stattfinden.

Wie anhand der Fig. 5 erkennbar ist, ist jeder Stirnbereich des Auszugprofiles 8 im Bereich jedes Mitnehmers 16 so geführt, dass er entgegen der Aufwickelrichtung nach hinten aus dem jeweiligen Mitnehmer 16 entnommen werden kann. Der Mitnehmer 16 weist ein C-förmiges Profil auf, das in der fahrzeugseitigen Führung 9 linear geführt ist und eine untere Stützfläche besitzt, auf der der Stirnbereich des Auszugprofiles 8 mit einer korrespondierenden ebenen Auflagefläche aufliegt. Mit Hilfe von Kraftvektoren ist angedeutet, welche Kräfte in eingehängtem Zustand des Auszugprofiles 8 auf das Auszugprofil 8 wirken. Die Kraftkomponente F₁ gibt die Zugkraft des Flächengebildes 7 wieder, das durch die Rückholkraft der Wickelfeder im Bereich der Wickelwelle 6 gestrafft wird. Mit dem Kraftvektor F₂ wird die durch die Reibkraft zwischen Stützfläche des Mitnehmers 16 und Auflagefläche des Auszugprofiles 8 wirkende Normalkraft dargestellt. Das Auszugprofil 8 wird daher mit dem Mitnehmer 16 mitgeführt, bis eine Gegenkraft in Form eines Hindernisses oder einer manuellen Bedienkraft auf das Auszugprofil 8 wirkt. Durch eine derartige Gegenkraft hängt sich das Auszugprofil 8 automatisch aus den Mitnehmern 16 aus und kommt frei.

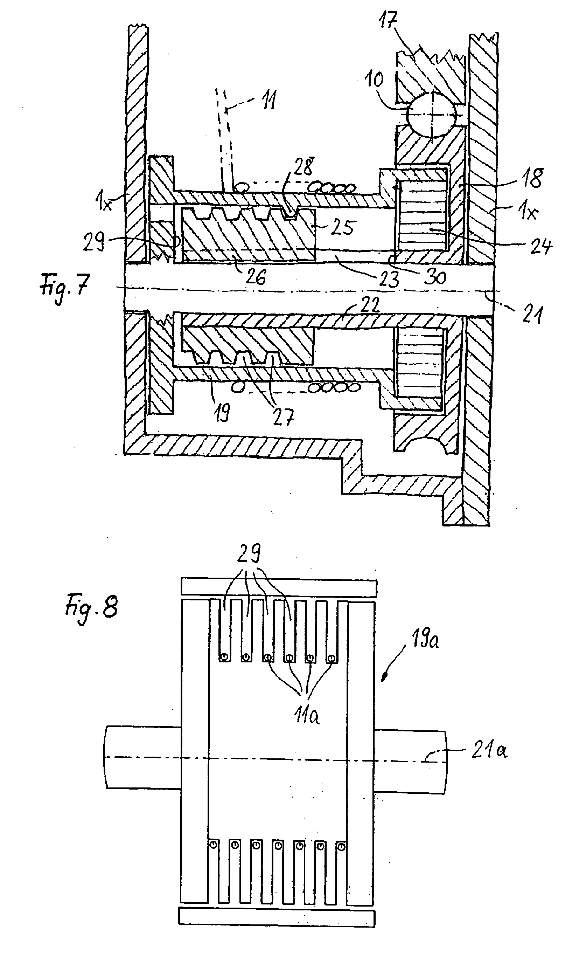

Anhand der Fig. 7 ist die Ausführungsform der Wickeltrommel 19 und ihre Wirkverbindung zu dem Antriebsrad 18 näher definiert. Mit dem Bezugszeichen 1 x ist ein fahrzeugseitig befestigtes Gehäuse vorgesehen, das Teil der Antriebseinheit 12 gemäß Fig. 1 ist und in dem das Antriebsrad 18 und die Wickeltrommel 19 um eine gemeinsame Drehachse 21 drehbar gelagert sind. Die Wickeltrommel 19 ist koaxial zum Antriebsrad 18 gelagert und ist mit dem Antriebsrad 18 über eine nachfolgend näher beschriebene Sicherungsmechanik zusammen mit einer entsprechenden Zählmechanik gekoppelt. Die Wickeltrommel 19 ist als Hohlprofil ausgeführt, das mit einem Außenmantel für die Aufnahme der Wickelwindungen des Übertragungsseiles 11 versehen ist. Das Antriebsrad 18 ist mit einem axial in das Hohlprofil der Wickeltrommel 19 hineinragenden Nabenabschnitt 22 versehen, der mit einer parallel zur Drehachse 21 verlaufenden Längsnut 23 versehen ist. Auf dem Nabenabschnitt 22 ist eine Gewindeschnecke 25 längsverschiebbar geführt, die mittels eines Innensteges 26 längs des Nutabschnittes 23 linear verschiebbar geführt ist. Außenseitig ist die Gewindeschnecke 25 mit einem Außengewinde versehen, in die ein Innengewindeabschnitt 28 der Wickeltrommel 19 eingreift. Die Wickeltrommel 19 ist drehfest mit einer Achswelle verbunden, die um die Drehachse 21 in dem Gehäuse 1x drehbar gelagert ist. Die Wickeltrommel 19 kann einstückig mit der Achswelle ausgeführt sein. Relative Drehbewegungen zwischen dem Antriebsrad 18 und der Wickeltrommel 19 führen somit zwangsläufig zu einem Vorschub der Gewindeschnecke 25 in einer der beiden Axialrichtungen, die der Gewindeschnecke 25 durch den Nutabschnitt 23 vorgegeben sind. Sobald die Gewindeschnecke 25 an einem der beiden stirnseitigen Axialanschläge 29 oder 30 anschlägt, ist keine Relativbewegung mehr zwischen Wickeltrommel 19 und Antriebsrad 18 möglich. Vielmehr sind diese mit dem Erreichen des entsprechenden Axialanschlages 29, 30 zeitweise drehfest miteinander verbunden, bis eine Relativdrehbewegung zwischen Wickeltrommel 19 und Antriebsrad 18 in entsprechend umgekehrter Drehrichtung wieder zu einem Wandern der Gewindeschnecke 25 in entgegengesetzter Richtung führt. Die Anzahl der Windungen, die der Innengewindeabschnitt 28 relativ zum Außengewinde der Gewindeschnecke 25 zurücklegen muss, um den jeweiligen Axialanschlag 29, 30 zu erreichen, bildet gleichzeitig eine Zählmechanik, die die Anzahl von freilaufenden Umdrehungen der Wickeltrommel 19 relativ zum Antriebsrad 18 und umgekehrt vorgibt.

Die so gebildete Sicherungsmechanik zwischen Wickeltrommel 19 und Antriebsrad 18 wird durch eine Spiralfeder 24 betätigt, die zwischen Wickeltrommel 19 und Antriebsrad 18 wirkt und bei einem Blockieren des Zug- und Druckmittels aufgrund eines Missbrauches eine Aufwickelkraft für die Windungen des Übertragungsseiles 11 bietet und so das Aufwickeln des Übertragungsseiles 11 vornimmt.

Um sicherzustellen, dass die einzelnen Wickelwindungen des Übertragungsseiles 11a exakt nebeneinander aufgereiht werden, so dass ein gleichmäßiges Auf- und Abwickeln des Übertragungsseiles 11a erzielt wird, ist die Wickeltrommel 19a gemäß der Ausführungsform nach Fig. 8 zusätzlich mit Windungskammern 19 für jeweils eine Seilwindung des Übertragungsseiles 11 a versehen. Hierdurch wird die Gefahr vermieden, dass bei der Wegnahme der Zugbelastung auf den Seilzug ein Auflaufen und eine Verwirrung oder Verwicklung mehrerer Windungen des Übertragungsseiles erzielt wird. Die Windungskammer 29 gewährleistet, dass sich die Windungsschlaufen zwar vergrößern können, ohne aber mit den benachbarten Windungsschlaufen in Kontakt zu treten. Eine erneut auftretende Zugbelastung führt dann wieder zu exaktem und gleichmäßigem Umschlingen der Wickeltrommel 19a. Die Wickeltrommel 19a ist um die Drehachse 21 a drehbeweglich gelagert.

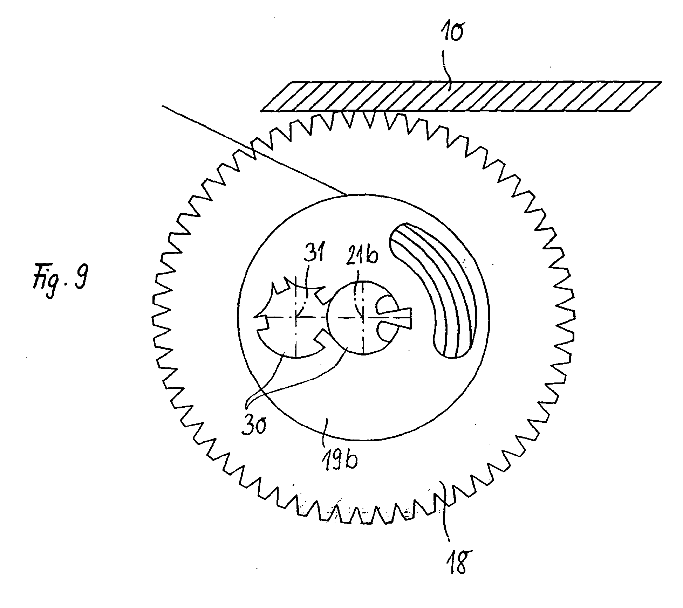

Die Ausführungsform nach Fig. 9 weist ähnlich der Ausführung nach den Fig. 6 und 7 ebenfalls ein Antriebsrad 18 auf, das auf das Zug- und Druckmittel 10 einwirkt. Funktionsgleiche Teile sind mit gleichen Bezugszeichen, gegebenenfalls unter Hinzufügung des Buchstabens b, versehen. Wesentlicher Unterschied zu der Ausführungsform nach Fig. 9 ist es, dass hier als Zählmechanik eine Malteser-Kreuzstellung vorgesehen ist, wie anhand der Fig. 9 gut erkennbar ist. Der mit dem Zapfen versehene Wellenfortsatz der beiden Scheibenräder 30 ist drehfest mit der Wickeltrommel 19b um die Drehachse 21 b verdrehbar gelagert. Das andere Scheibenrad 30 ist gehäuseseitig drehbar gelagert und bewegt sich in der Stellung gemäß der Fig. 9 nicht. Dieses Scheibenrad 30 weist mehrere Aussparungen auf, in die der Zapfen des anderen Scheibenrades 30 eingreifen kann, sobald das andere Scheibenrad die entsprechende Drehstellung relativ zu dem mit den Aussparungen versehenen Scheibenrad erreicht hat. Aufbau und Funktion der Malteser-Kreuzstellung, wie anhand der Fig. 9 erkennbar, sind grundsätzlich bekannt.

Die Wickeltrommel 19 weist einen geringeren Durchmesser auf als das Antriebsrad 18. Dadurch wird zwischen dem die Windungen des Übertragungsseiles 11 aufnehmenden Außenmantel der Wickeltrommel 19 und einem entsprechenden Teilkreisdurchmesser des Antriebsrades 18 ein Übersetzungsverhältnis geschaffen, dessen Größe sich nach den entsprechenden Abmessungen und Dimensionierungen des Verlagerungsweges des Auszugprofiles und des Schwenkweges der Heckklappe bestimmt. Durch das entsprechende Übersetzungsverhältnis des geschaffenen Übersetzungsgetriebes wird eine Abstimmung des Verlagerungsweges des Auszugprofiles auf den Schwenkweg der Heckklappe zwischen Schließ- und Öffnungsposition derart erzielt, dass das Auszugsprofil bei geschlossener Heckklappe in seiner unteren, horizontalen Funktionsposition und bei vollständig geöffneter Heckklappe in seiner oberen Funktionsposition ist.

## Patentansprüche

1. Laderaumabdeckung für ein Kraftfahrzeug mit einem flexiblen Flächengebilde (7), das mit einem Stirnende auf einer fahrzeugseitig angeordneten Wickelwelle (6) auf- und abwickelbar gehalten und an seinem anderen Stirnende mit einem formstabilen, sich wenigstens über die Breite des Flächengebildes (7) erstreckenden Auszugprofil (8) verbunden ist, wobei das Auszugprofil (8) in fahrzeugseitigen Führungen (9) zwischen einer ersten Funktionsstellung und wenigstens einer zweiten Funktionsstellung parallel zu einer Wickelachse der Wickelwelle (6) verlagerbar ist, und wobei Steuermittel (10 bis 12) vorgesehen sind, die die Verlagerung des Auszugprofiles (8) abhängig von einer Öffnungs- oder Schließbewegung eines den Laderaum (2) auf wenigstens einer Seite verschließenden oder freigebenden, beweglichen Karosserieteiles (3) bewirken, wobei das Auszugprofil (8) an seinen gegenüberliegenden Stirnbereichen jeweils lösbar mit jeweils einem flexiblen Kraftübertragungsmittel (10) in Verbindung steht, das in der jeweiligen fahrzeugseitigen Führung (9) längsbeweglich angeordnet ist und durch wenigstens ein fahrzeugseitig gelagertes Antriebsrad (17, 18) permanent in beiden Richtungen kraftbeaufschlagt ist, **dadurch gekennzeichnet, dass** die Steuermittel (10-12) mechanisch sind und dass das Kraftübertragungsmittel (10) mittels wenigstens eines mechanischen Übertragungsmittels (11) durch eine Bewegung des Karosserieteiles antreibbar ist.

2. Laderaumabdeckung nach Anspruch 1, **dadurch gekennzeichnet, dass** die fahrzeugseitigen Führungen (9) gekrümmt verlaufen, und dass die Zug- und Druckmittel (10) Mitnehmer (16) aufweisen, die entgegen einer Aufwickelrichtung des Flächengebildes (7) offen gestaltet sind.

3. Laderaumabdeckung nach Anspruch 2, **dadurch gekennzeichnet, dass** eine Stützfläche jedes Mitnehmers (16) eben und parallel zu der jeweiligen fahrzeugseitigen Führung (9) gestaltet ist, und dass ein korrespondierender Stirnbereich des Auszugprofils mit einer entsprechend gestalteten ebenen Auflagefläche versehen ist, die sich kraftschlüssig auf der Stützfläche abstützt.

4. Laderaumabdeckung nach Anspruch 1, **dadurch gekennzeichnet, dass** das Zug- und Druckmittel (10) tangential zwischen dem Antriebsrad (18) und einem parallel drehbar gelagerten Rückholrad (17) gehalten ist, das mit einem in Rückholrichtung wirksamen Federspeicher (20) versehen ist, wobei das Antriebsrad und das Rückholrad einander relativ zu dem Zug- und Druckmittel gegenüberliegen.

5. Laderaumabdeckung nach wenigstens einem der vorhergehenden Ansprüche, **dadurch gekennzeichnet, dass** das Zug- und Druckmittel (10) als flexible Welle mit einer verzahnungs- oder gewindeförmigen Außenprofilierung ausgeführt ist, und dass das Antriebsrad (18) und/oder das Rückholrad (17) als Zahnräder gestaltet sind.

6. Laderaumabdeckung nach Anspruch 1, **dadurch gekennzeichnet, dass** das Übertragungsmittel als Seilzug ausgeführt ist, der über einen außerhalb eines Fahrzeuginnenraumes verlaufenden Teil seiner Länge längs einer Gasdruckfeder (5) zur Unterstützung einer Öffnungsbewegung des Karosserieteiles (3) verlegt ist.

7. Laderaumabdeckung nach Anspruch 6, **dadurch gekennzeichnet, dass** der Gasdruckfeder (5) eine Hülsenblende (15) zugeordnet ist, die einen Verlauf des Seilzuges (11) längs der Gasdruckfeder (5) überdeckt.

8. Laderaumabdeckung nach Anspruch 1, **dadurch gekennzeichnet, dass** dem mechanischen Übertragungsmittel ein Übersetzungsgetriebe zugeordnet ist, um einen Öffnungs- oder Schließweg des Karosserieteiles (3) auf einen Verlagerungsweg des Zug- und Druckmittels (10) abzustimmen.

9. Laderaumabdeckung nach Anspruch 6, **dadurch gekennzeichnet, dass** dem Antriebsrad (18) eine Wickeltrommel (19) zugeordnet ist, auf die ein Übertragungsseil (11) des Seilzugs auf- und abwickelbar ist.

10. Laderaumabdeckung nach Anspruch 9, **dadurch gekennzeichnet, dass** die Wickeltrommel (19a) Windungskammern (29) aufweist, um benachbarte Windungen des Übertragungsseiles (11a) auf der Wickeltrommel (19a) voneinander zu trennen.

11. Laderaumabdeckung nach Anspruch 9, **dadurch gekennzeichnet, dass** die Wickeltrommel (19) mittels einer Sicherungsmechanik mit dem Antriebsrad (18) in Wirkverbindung steht.

12. Laderaumabdeckung nach Anspruch 11, **dadurch gekennzeichnet, dass** der Sicherungsmechanik eine Zählmechanik zugeordnet ist, die abhängig von einer definierten Anzahl von Umdrehungen der Wickeltrommel die Sicherungsmechanik in ihre Leerlaufstellung oder ihre Antriebsstellung überführt.

## Claims

1. Load compartment cover for a motor vehicle, comprising a flexible sheet-like structure (7) which is held by one end on a winding shaft (6), arranged on the vehicle, in a manner such that it can be wound up and unwound and which at its other end is connected to a dimensionally stable pull-out profile member (8) which extends at least over the width of the sheet-like structure (7), wherein the pull-out profile member (8) is displaceable in guides (9) on the vehicle, parallel to a winding axis of the winding shaft (6), between a first operational position and at least one second operational position, and wherein control means (10 to 12) are provided which bring about the displacement of the pull-out profile member (8) in dependence on an opening or closing movement of a movable bodywork part (3) which closes or opens the load compartment (2) on at least one side, wherein the pull-out profile member (8) is detachably connected at each of its opposite end regions to a respective flexible force transmission means (10) which is arranged to be longitudinally movable in the respective guide (9) on the vehicle and which is permanently loaded by a force in both directions by means of at least one drive wheel (17, 18) supported on the vehicle, **characterised in that** the control means (10 to 12) are mechanical and the force transmission means (10) is drivable by means of at least one mechanical transmission means (11) by movement of the bodywork part.

2. Load compartment cover according to claim 1, **characterised in that** the guides (9) on the vehicle extend in a curve, and the push/pull means (10) have engaging features (16) which are constructed to be open counter to a winding-up direction of the sheet-like structure (7).

3. Load compartment cover according to claim 2, **characterised in that** a supporting face of each engaging feature (16) is flat and parallel to the respective guide (9) on the vehicle, and a corresponding end region of the pull-out profile member is provided with a correspondingly shaped flat contact face which is supported non-positively on the supporting face.

4. Load compartment cover according to claim 1, **characterised in that** the push/pull means (10) is held tangentially between the drive wheel (18) and a return wheel (17) mounted to be rotatable in parallel and provided with a spring energy accumulator (20) which is effective in the return direction, wherein the drive wheel and the return wheel lie opposite each other relative to the push/pull means.

5. Load compartment cover according to at least one of the preceding claims, **characterised in that** the push/pull means (10) is in the form of a flexible shaft having a toothed or threaded outer profile, and the drive wheel (18) and/or the return wheel (17) is/are in the form of gearwheels.

6. Load compartment cover according to claim 1, **characterised in that** the transmission means is in the form of a cable pull which, over a portion of its length extending outside a vehicle interior, is laid along the length of a gas spring (5) for assisting an opening movement of the bodywork part (3).

7. Load compartment cover according to claim 6, **characterised in that** the gas spring (5) is associated with a covering sleeve (15) which covers a run of the cable pull (11) along the length of the gas spring (5).

8. Load compartment cover according to claim 1, **characterised in that** the mechanical transmission means is associated with transmission gearing in order to match an opening or closing travel of the bodywork part (3) to a displacement travel of the push/pull means (10).

9. Load compartment cover according to claim 6, **characterised in that** the drive wheel (18) is associated with a winding drum (19) onto which and from which a transmission cable (11) of the cable pull can be wound and unwound.

10. Load compartment cover according to claim 9, **characterised in that** the winding drum (19a) has winding chambers (29) in order to separate adjacent turns of the transmission cable (11 a) on the winding drum (19a) from one another.

11. Load compartment cover according to claim 9, **characterised in that** the winding drum (19) is in operative connection with the drive wheel (18) by means of a safety mechanism.

12. Load compartment cover according to claim 11, **characterised in that** the safety mechanism is associated with a counting mechanism which, depending on a defined number of revolutions of the winding drum, transfers the securing mechanism to its idle position or its driving position.

## Revendications

1. Volet cache-bagages pour un véhicule automobile, avec une pièce flexible bidimensionnelle (7) qui est maintenue par une extrémité frontale sur un arbre d'enroulement (6) disposé côté véhicule de sorte à pouvoir être enroulée et déroulée, et qui est reliée au niveau de son autre extrémité frontale à un profilé d'extraction (8) indéformable s'étendant au moins sur la largeur de la pièce bidimensionnelle (7), le profilé d'extraction (8) étant déplaçable dans des guides (9) côté véhicule de manière parallèle par rapport à un axe d'enroulement de l'arbre d'enroulement (6), entre une première position fonctionnelle et au moins une deuxième position fonctionnelle, et des moyens de commande (10 à 12) étant prévus, lesquels provoquent le déplacement du profilé d'extraction (8) en fonction d'un mouvement d'ouverture ou de fermeture d'une pièce de carrosserie (3) fermant ou dégageant au moins d'un côté l'espace de chargement (2), le profilé d'extraction (8) étant relié de manière amovible au niveau de ses zones frontales opposées à respectivement un moyen flexible de transmission de force (10), qui est disposé de manière mobile dans le sens longitudinal dans le guide (9) respectif côté véhicule et qui est soumis en permanence dans les deux sens à une force par au moins une roue d'entraînement (17, 18) logée côté véhicule, **caractérisé en ce que** les moyens de commande (10 à 12) sont mécaniques, et **en ce que** le moyen de transmission de force (10) est actionnable par un mouvement de la pièce de carrosserie au moyen d'au moins un dispositif mécanique de transmission (11).

2. Volet cache-bagages selon la revendication 1, **caractérisé en ce que** le tracé des guides (9) côté véhicule est incurvé, et **en ce que** les moyens de traction et de poussée (10) présentent des entraîneurs (16), qui sont réalisés de manière ouverte à l'opposé d' un sens d'enroulement de la pièce bidimensionnelle (7).

3. Volet cache-bagages selon la revendication 2, **caractérisé en ce qu'**une surface d'appui de chaque entraîneur (16) est configurée de manière plane et de manière parallèle par rapport au guide (9) respectif côté véhicule, et **en ce qu'**une zone frontale correspondante du profilé d'extraction est pourvue d'une surface d'appui plane configurée en conséquence, laquelle surface s'appuie avec adhérence sur la surface d'appui.

4. Volet cache-bagages selon la revendication 1, **caractérisé en ce que** le moyen de traction et de poussée (10) est maintenu de manière tangentielle entre la roue d'entraînement (18) et une roue de rappel (17), logée de manière à pouvoir tourner parallèlement, laquelle roue est pourvue d'un accumulateur à ressort (20) agissant dans le sens du rappel, la roue d'entraînement et la roue de rappel étant disposées de part et d'autre du moyen de traction et de poussée.

5. Volet cache-bagages selon au moins l'une quelconque des revendications précédentes, **caractérisé en ce que** le moyen de traction et de poussée (10) est réalisé comme un arbre flexible avec un profilage extérieur en forme de denture ou de filetage, et **en ce que** la roue d'entraînement (18) et/ou la roue de rappel (17) sont configurés comme des roues dentées.

6. Volet cache-bagages selon la revendication 1, **caractérisé en ce que** le moyen de transmission est réalisé comme un câble de commande qui, le long d'une partie de sa longueur s'étendant à l'extérieur d'un habitacle de véhicule, est installée le long d'un ressort pneumatique (5) pour l'assistance d'un mouvement d'ouverture de la pièce de carrosserie (3).

7. Volet cache-bagages selon la revendication 6, **caractérisé en ce qu'**un obturateur de douille (15) est affecté au ressort pneumatique (5), lequel obturateur recouvre un tracé du câble de commande (11) le long du ressort pneumatique (5).

8. Volet cache-bagages selon la revendication 1, **caractérisé en ce qu'**un train d'engrenages est affecté au dispositif mécanique de transmission pour adapter une course d'ouverture ou de fermeture de la pièce de carrosserie (3) à une course de déplacement du moyen de traction et de poussée (10).

9. Volet cache-bagages selon la revendication 6, **caractérisé en ce qu'**un tambour d'enroulement (19), sur lequel peut s'enrouler et se dérouler un câble de transmission (11) du câble de commande, est affecté à la roue d'entraînement (18).

10. Volet cache-bagages selon la revendication 9, **caractérisé en ce que** le tambour d'enroulement (19a) présente des chambres de spires (29) pour séparer les unes des autres sur le tambour d'enroulement (19a) les spires voisines du câble de transmission (11a).

11. Volet cache-bagages selon la revendication 9, **caractérisé en ce que** le tambour d'enroulement (19) est relié de manière active à la roue d'entraînement (18) au moyen d'un mécanisme de verrouillage.

12. Volet cache-bagages selon la revendication 11, **caractérisé en ce qu'**un mécanisme de comptage qui, en fonction d'un nombre défini de tours du tambour d'enroulement, amène le mécanisme de verrouillage dans sa position de rotation à vide ou dans sa position d'entraînement, est affecté au mécanisme de verrouillage.
